(19) Europäisches Patentamt
European Patent Office
Office européen des brevets

(11) EP 4 613 815 A1

(12) EUROPEAN PATENT APPLICATION
published in accordance with Art. 153(4) EPC

(43) Date of publication:
**10.09.2025 Bulletin 2025/37**

(21) Application number: **23885769.2**

(22) Date of filing: **31.10.2023**

(51) International Patent Classification (IPC):
***C09C 1/28*** (2006.01) ***C09C 1/40*** (2006.01)
***C09C 3/10*** (2006.01) ***C09D 17/00*** (2006.01)

(52) Cooperative Patent Classification (CPC):
**C09C 1/28; C09C 1/40; C09C 3/10; C09D 17/00**

(86) International application number:
**PCT/JP2023/039304**

(87) International publication number:
**WO 2024/096015 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 PCT/JP2022/040828**

(71) Applicant: **Soken Chemical & Engineering Co., Ltd.**
**Toshima-ku**
**Tokyo 171-8531 (JP)**

(72) Inventor: **KOJIMA, Ryota**
**Tokyo 171-8531 (JP)**

(74) Representative: **Gulde & Partner**
**Patent- und Rechtsanwaltskanzlei mbB**
**Berliner Freiheit 2**
**10785 Berlin (DE)**

(54) **COMPOSITE POWDER PARTICLES AND METHOD FOR PRODUCING COMPOSITE POWDER PARTICLES**

(57) A composite powder having excellent slip properties and soft-focus properties is provided.

According to the present invention, provided is a composite powder comprising mica, a coating layer, and a spherical particle, wherein: the coating layer coats the mica; the spherical particle is attached to the mica or the coating layer; and the coating layer and the spherical particle are composed of a water-resistant organic material.

EP 4 613 815 A1

## Description

### TECHNICAL FIELD

The present invention relates to a composite powder and a method for producing a composite powder.

### BACKGROUND ART

Conventionally, various powders are developed for cosmetics such as makeup and skin care products, using inorganic materials such as silica, talc, and mica, and synthetic resin materials such as polyurethane and polyethylene. However, it has been difficult to obtain a composite powder that has both slip properties when applied to skin and soft-focus properties (light diffusion properties).

Furthermore, in light of the issue of microplastics, which has been pointed out in recent years as a cause of environmental concern such as marine pollution, cosmetics that contain reduced amounts of synthetic resin particles that can become microplastics, or that do not contain any of them, are considered.

For example, Patent Literature 1 discloses a starch-coated powder, wherein the surface of the powder is coated with starch.

### CITATION LIST

### PATENT LITERATURE

Patent Literature 1 JP-A-2011-140444

### SUMMARY OF INVENTION

### TECHNICAL PROBLEM

However, with conventional techniques, it has been difficult to obtain a composite powder having excellent slip properties and soft-focus properties.

The present invention has been made in view of such circumstance, and an object of the present invention is to provide a composite powder having excellent slip properties and soft-focus properties.

### SOLUTION TO PROBLEM

According to the present invention, provided is a composite powder comprising mica and a spherical particle, wherein:

the coating layer coats the mica;
the spherical particle is attached to the mica or the coating layer; and
the coating layer and the spherical particle are composed of a water-resistant organic material.

The present inventors have made intensive studies and found that in a composite powder containing mica and a spherical particle, by coating the mica with a water-resistant organic material and attaching the spherical particle containing the water-resistant organic material to the mica, a composite powder having excellent slip properties and soft-focus properties can be obtained, completing the present invention.

Various embodiments of the present invention will be exemplified below. The embodiments shown below can be combined with each other.

[1] A composite powder comprising mica, a coating layer, and a spherical particle, wherein:

the coating layer coats the mica;
the spherical particle is attached to the mica or the coating layer; and
the coating layer and the spherical particle are composed of a water-resistant organic material.

[2] The composite powder of [1], the composite powder has an average friction coefficient of 0.75 or less and a soft focus factor of 0.86 or more.

[3] The composite powder of [1] or [2], comprising 10 parts by mass or more of the water-resistant organic material with respect to 100 parts by mass of the mica.

[4] The composite powder of any one of [1] to [3], used for cosmetic.

[5] A method for producing the composite powder of any one of [1] to [4], comprising a dispersion preparation step, a spray drying step, and a heat treatment step, wherein:

in the dispersion preparation step, a dispersion containing the mica and a precursor organic material is prepared;
in the spray drying step, the dispersion is spray dried to obtain a composite powder precursor; and
in the heat treatment step, the composite powder precursor is heat treated to convert at least a part of the precursor organic material into the water-resistant organic material.
[6] The method for producing the composite powder of [5], wherein the solubility of the precursor organic material when immersed in water at 25°C for three days is at least 5% by mass higher than the solubility of the water-resistant organic material when immersed in water at 25°C for three days.

EFFECTS OF INVENTION

The composite powder according to the present invention has excellent slip properties and soft-focus properties. Furthermore, the method for producing composite powder according to the present invention provides a composite powder having excellent slip properties and soft-focus properties. Taking advantage of these properties, the composite powder according to the present invention can be used for cosmetics.

BRIEF DESCRIPTION OF THE DRAWINGS

FIG. 1 is a SEM photograph of Composite Powder 1 according to Example 1.

DESCRIPTION OF EMBODIMENTS

The present invention will be described in detail below by illustrating the embodiments of the present invention. The present invention is not limited by these descriptions. The various features of the embodiments of the present invention shown below can be combined with each other. In addition, each feature can be an invention independently.

1. Components of Composite Powder

The composite powder according to the present invention is a composite powder comprising mica, a coating layer, and a spherical particle, wherein the coating layer coats the mica, the spherical particle is attached to the mica or the coating layer; and the coating layer and the spherical particle are composed of a water-resistant organic material.

1.1 Mica

The composite powder according to the present invention contains mica. The mica can be in the form of a plate or a scale. The mica can be natural or synthetic. The average particle size of the mica can be 5 to 100 μm. The average particle size of the mica can be, for example, 5, 10, 15, 20, 25, 30, 35, 40, 45, 50, 55, 60, 65, 70, 75, 80, 85, 90, 95, 100 μm, and may be within the range between any two of the numerical values exemplified here. The average particle size of mica refers to the average value of the width and length of the powder in a water-dispersed state measured using a laser diffraction scattering type particle size distribution measuring device (particle size value at 50% of the cumulative volume). The aspect ratio of the mica can be 20 to 200, for example, 20, 40, 60, 80, 100, 120, 140, 160, 180, or 200, and may be within the range between any two of the numerical values exemplified here. The aspect ratio can be defined as the ratio of the major axis to the thickness of mica.

1.2 Coating Layer

The mica according to the present invention is preferably at least partially coated with the coating layer and is preferably entirely coated with the coating layer. Whether the mica is coated with the coating layer can be confirmed by SEM observation; EDS (energy dispersive X-ray analysis); taking out a composite powder precursor during the producing process, redissolving a precursor organic material that coats the mica, and confirming its mass; or the like. Since the mica of the composite powder according to the present invention is coated with the coating layer composed of a water-resistant organic material, the composite powder according to the present invention has soft-focus properties superior to those of conventional powders.

1.3 Spherical Particle

The composite powder according to the present invention includes a spherical particle. The spherical particle includes particles that are approximately spherical and refers to particles having a rounded shape. The ratio of the maximum diameter of the spherical particle to the minimum diameter of the spherical particle is preferably 0.5 to 1.5, and more preferably 0.8 to 1.2. The spherical particle may include a spherical particle having a partially crushed or cut spherical shape, such as a hemispherical particle (a lens-like particle, and the like), but at least half of the spherical particles in the composite powder preferably have the ratio of the maximum diameter of the spherical particle to the minimum diameter of the spherical particle in the above numerical range. In addition, from the viewpoint of soft-focus properties and slip properties, it is preferable that the spherical particle has few dents or wrinkles on the surface and the surface is smooth.

At least one spherical particle is attached to the mica or the coating layer according to the present invention, and it is preferred that at least one spherical particle is attached to both main surfaces of the mica directly or via a coating layer. Hereinafter, the particle attached to the mica refers to a particle attached to the mica directly or via the coating layer. The number of the spherical particle attached to one side of one mica particle may be 1 to 100, for example, 1, 2, 3, 5, 9, 10, 15, 20, 15, 30, 31, 40, 50, 60, 70, 80, 90, or 100, and may be within a range between any two of the numerical values exemplified here. The presence or absence of the spherical particle attached to the mica and the number of the spherical particle attached to one mica particle can be confirmed by observing the composite powder with SEM. The average number of the spherical particle attached to one side of one mica particle can be determined by observing multiple mica particles and dividing the total number of spherical particles attached to one side of each mica by the number of mica particles observed. Some of the spherical particles may not be attached to the mica, and the composite powder according to one embodiment of the present invention may also contain a spherical particle that is not attached to the mica.

The average particle size of the spherical particles attached to the mica can be 10 μm or less. The average particle size can be 0.1 to 10 μm, for example, 0.1, 0.5, 1, 2, 3, 4, 5, 6, 7, 8, 9, or 10 μm, and may be within the range between any two of the numerical values exemplified here. The average particle size of the spherical particles can be measured by SEM observation. The average particle size can be obtained by measuring the particle size of each spherical particle one by one and taking the average value.

Furthermore, the spherical particle attached to the mica can include a spherical particle having a particle diameter of 0.1 μm or more, preferably include a spherical particle having a particle diameter of 0.5 μm or more, and preferably include a spherical particle having a particle diameter of 1.0 μm or more, and preferably include a plurality of particles having such average particle diameters.

The shape, size, and number of attached spherical particles can be controlled by adjusting the type and amount of the water-resistant organic material and the production conditions of the composite powder. In particular, they can be controlled by adjusting the type and amount of the mica and precursor organic material blended in the dispersion and the conditions in the spray drying step.

1.4 Water-Resistant Organic Material

The coating layer and spherical particle according to the present invention are composed of water-resistant organic material. The water-resistant organic material means an organic material that is not easily dissolved in water. Specifically, the water-resistant organic material can be an organic material whose solubility when immersed in water at 25°C for three days is less than 80% by mass. The water-resistant organic material has a solubility of, for example, 0, 5, 10, 15, 20, 25, 30, 35, 40, 45, 50, 55, 60, 65, 70, 75% by mass or less than 80% by mass when immersed in water at 25°C for three days, and it may be within the range between any two of the numerical values exemplified here. In terms of water resistance that can be used as a cosmetic powder, the solubility of the water-resistant organic material is preferably 60% by mass or less, and particularly preferably 20% by mass or less.

The solubility when immersed in water at 25°C for three days can be calculated by immersing the target material in ion-exchanged water at 25°C for three days and using the following formula, where A g is the mass of the sample before immersion and B g is the mass of the residue after immersion.

$$[\text{Solubility (\% by mass)}] = (A - B)/A \times 100$$

The solubility of the organic material contained in the composite powder can also be evaluated by analyzing the composite powder. In this case, the content (% by mass) of the mica and the water-resistant organic material in the composite powder is calculated in advance using the method described below, and the composite powder is immersed in ion-exchanged water at 25°C for three days. The solubility of the organic material contained in the composite powder can be calculated from the change in mass before and after immersion and the content of the organic material contained in the composite powder. The solubility of the water-resistant organic material can be controlled by adjusting the type of water-resistant organic material and the production conditions during the production of the composite powder (the type of precursor organic material to be blended in the dispersion, and the heat treatment temperature and time).

The water-resistant organic material is preferably biodegradable. Biodegradability means the ability of a material such as polymer to decompose and disappear in the earth's environment, such as in soil or seawater, and/or to decompose and disappear in the living body. As one example, the water-resistant organic material preferably has a BOD decomposition rate of 60% or more when exposed to activated sludge for 28 days based on OECD TG301C. As one example, the water-resistant organic material preferably has a relative decomposition rate of 60% or more with respect to cellulose when buried in soil based on JIS K 6955 (ISO17556) or has a relative decomposition rate of 90% or more with respect to cellulose. As one example, the water-resistant organic material preferably has a relative decomposition rate of 60% or more with respect to cellulose when placed in seawater and sandy sediments based on ISO19679.

The water-resistant organic material may be one type of compound or may contain two or more types of compounds. The water-resistant organic material may be obtained by using a precursor organic material described below as a raw material and by subjecting the precursor organic material to a heat treatment. The water-resistant organic material may be a material obtained by heat treating the precursor organic material to enhance the crystallinity and water resistance of the precursor organic material. Specific examples of the water-resistant organic material will be described later in the description of the precursor organic material.

1.5 Content of Mica and Water-Resistant Organic Material in Composite Powder

The composite powder according to one embodiment of the present invention preferably contains 10 parts by mass or more of the water-resistant organic material with respect to 100 parts by mass of the mica in the composite powder, and more preferably contains more than 10 parts by mass. The content of the water-resistant organic material with respect to 100 parts by mass of mica is, for example, 10, 15, 20, 25, 30, 35, 40, 45, 50, 55, 60, 65, 70, 75, 80, 85, 90, 95, 100, 110, 120, 130, 140, 150, 200, 250, 300, 350, 400, 450, 500, 550, 600, 650, 700, 750, 800, 850, 900, 950, 1000, 1050, 1100, 1150, or 1200 parts by mass and may be within the range between any two of the numerical values exemplified here.

The content of the mica and water-resistant organic material in the composite powder can be calculated by heating the composite powder at a temperature higher than the temperature at which the water-resistant organic material is burned and then calculating the content from the mass before heating (including the mica and the water-resistant organic material) and the mass after heating (including the mica).

The composite powder according to one embodiment of the present invention may include 50 parts by mass or more of the mica and water-resistant organic material in total, for example, 50, 60, 70, 80, 90, or 100 parts by mass with respect to 100 parts by mass of the composite powder, and may be within the range between any two of the numerical values exemplified here. The composite powder according to one embodiment of the present invention may be composed of the mica and water-resistant organic material.

The composite powder according to one embodiment of the present invention may contain known components used in cosmetics within a range that does not impair the effects of the present invention. Examples of known components include inorganic powders, organic powders, oily components, surfactants, UV absorbers, moisturizers, anti-fading agents, antioxidants, defoamers, preservatives, fragrances, solubilizers, plasticizers, viscosity adjusters, skin beautifying components (skin whitening agents, cell activators, skin roughness improving agents, blood circulation promoters, skin astringents, antiseborrheic agents, and the like), vitamins, amino acids, antiperspirants, alcohols, film-forming agents, anti-inflammatory agents, cooling agents, nucleic acids, hormones, inclusion compounds, pH adjusters, chelating agents, and the like.

2. Physical Properties of Composite Powder

The composite powder according to one embodiment of the present invention preferably has the following physical properties.

2.1 Average Friction Coefficient (MIU)

The composite powder according to one embodiment of the present invention preferably has an average friction coefficient (MIU) of 0.75 or less, and it can be 0.40 to 0.75. The average friction coefficient can be, for example, 0.40, 0.45, 0.50, 0.55, 0.60, 0.65, 0.70, or 0.75, and may be within the range between any two of the numerical values exemplified here. The average friction coefficient can be determined by applying the composite powder to a skin material such as artificial skin and scanning it with a friction tester. Specifically, it can be measured by the method described in the Examples. By having an average friction coefficient equal to or greater than the above lower limit, the cosmetic powder can be maintained in a neat state after application to the skin, and a cosmetic product with excellent cosmetic retention can be obtained. In addition, there is little crumbling or falling off during or after molding by compression and the like, and the product has excellent moldability. When the average friction coefficient is equal to or less than the above upper limit, the cosmetic product, which is smooth, does not feel squeaky, and can be applied evenly, can be obtained. The average friction coefficient can be adjusted by the type and structure of the components of the composite powder, and in particular by controlling the number and size of the spherical particles attached to the mica.

2.2 Soft Focus Factor (SFF)

The composite powder according to one embodiment of the present invention preferably has a soft focus factor (SFF) of 0.86 or more, and it can be 0.86 to 1.40. The soft focus factor can be, for example, 0.86, 0.90, 0.95, 1.00, 1.05, 1.10, 1.15, 1.20, 1.25, 1.3, 1.35, or 1.40, and may be within the range between any two of the numerical values exemplified here. The soft focus factor can be measured by applying the composite powder to a skin material such as Bioskin and using a variable goniophotometer. The light source is fixed at a 45° position, and the sensor is scanned from 0° to 180° to measure the luminance at each angle, and the ratio of the luminance at the two points (the ratio of luminance at 65° to luminance at 135°) can be taken as the soft focus factor. Specifically, it can be measured by the method described in the examples. By setting the soft focus factor to the above lower limit or more, a cosmetic product with suppressed glare can be obtained. By setting the soft focus factor at or above the lower limit, it is possible to produce a cosmetic product with brightness that takes advantage of the high brightness of the mica itself, which is the extender pigment. The soft focus factor can be adjusted by the type and structure of the components of the composite powder. In particular, it can be adjusted by controlling the amount of water-resistant organic material coated on the mica, and the number and size of the spherical particles.

2.3 Solubility of Composite Powder

The composite powder according to one embodiment of the present invention preferably has a solubility of 40% by mass or less when immersed in water at 25°C for three days. For example, the solubility may be 0, 5, 10, 15, 20, 25, 30, 35, or 40% by mass, and may be within the range between any two of the numerical values exemplified here. The solubility of the composite powder when immersed in water at 25°C for three days can be calculated by immersing the composite powder in ion-exchanged water at 25°C for three days and using the following formula, where A g is the mass of the composite powder before immersion and B g is the mass of the residue after immersion.

$$[\text{Solubility (\% by mass)}] = (A - B)/A \times 100$$

The solubility of the composite powder can be controlled by adjusting the type and amount of the water-resistant organic material, and the production conditions during the production of the composite powder (the type and amount of the precursor organic material to be blended in the dispersion, and the heat treatment temperature and time).

The composite powder according to one embodiment of the present invention has a low average friction coefficient and a high soft focus factor and therefore can be used for cosmetics. In addition, the composite powder according to one embodiment of the present invention has excellent water resistance, so that it can maintain the characteristic particle structure of the present invention even in a moist environment, and can maintain the above-mentioned effects. Cosmetics can include liquid, gel, solid, and other types of cosmetics, such as foundation, face powder, eye shadow, eye liner, eyebrow, blush, lipstick, nail color and the like.

3. Method for Producing Composite Powder

The method for producing the composite powder according to one embodiment of the present invention can comprise a dispersion preparation step, a spray drying step, and a heat treatment step, wherein:

in the dispersion preparation step, a dispersion containing the mica and a precursor organic material is prepared;
in the spray drying step, the dispersion is spray dried to obtain a composite powder precursor; and
in the heat treatment step, the composite powder precursor is heat treated to convert at least a part of the precursor organic material into the water-resistant organic material.

3.1 Dispersion Preparation Step

In the dispersion preparation step, a dispersion containing the mica and the precursor organic material is prepared. As the mica, mica having the above-mentioned average particle size and aspect ratio can be used.

The precursor organic material is preferably an organic material that is soluble in water, from the viewpoints that it is easy to provide a coating layer on the mica and that soft-focus properties can be improved. The organic material that is soluble in water can exist uniformly in a solvent, making it easy to provide a coating layer on the mica surface. The organic material that is soluble in water can be defined as an organic material that leaves no residue when 1 g of the organic material is dissolved in 100 g of water.

The precursor organic material can be a material that has a higher solubility than the water-resistant organic material. Specifically, the precursor organic material can be an organic material that has a solubility of 80% by mass or more when immersed in water at 25°C for three days. The precursor organic material may have a solubility of, for example, 80, 85, 90, 95, 96, 97, 98, 99, or 100% by mass when immersed in water at 25°C for three days and may be within the range between any two of the numerical values exemplified here.

The precursor organic material may be one type of compound. The precursor organic material may contain two or more types of compounds. The precursor organic material may be a mixture containing an organic compound that is poorly soluble in water alone and a solubilizer that makes the organic compound more soluble in water. In this case, it is preferable that the solubility of the precursor organic material, which is a mixture, when immersed in water at 25°C for three days is 80% by mass or more.

The precursor organic material after heating at 180°C for 30 minutes preferably has a solubility of less than 80% by mass when immersed in water at 25°C for 3 days. The solubility of precursor organic material after heating at 180°C for 30 minutes, when immersed in water at 25°C for 3 days, can be, for example, 0, 5, 10, 15, 20, 25, 30, 35, 40, 45, 50, 55, 60, 65, 70, 75% by mass, or less than 80% by mass, and may be within the range between any two of the numerical values exemplified here. In terms of water resistance that can be used as a cosmetic powder, it is preferably 60% by mass or less and more preferably 20% by mass or less. The precursor organic material is preferably dissolved in water to form a uniform dispersion during dispersion preparation and preferably becomes water-resistant after the spray drying step and the heat treatment step. The water-resistant organic material can be obtained by heat treating the precursor organic material (for example, by increasing the crystallinity of the precursor organic material).

The solubility of the water-resistant organic material when immersed in water at 25°C for three days can be lower than the solubility of the precursor organic material when immersed in water at 25°C for three days. The difference between the solubility of the water-resistant organic material when immersed in water at 25°C for three days and the solubility of the precursor organic material when immersed in water at 25°C for three days is, for example, 5, 10, 15, 20, 25, 30, 35, 40, 45, 50, 55, 60, 65, 70, 75, 80, 85, 90, or 95% by mass, and may be within a range between any two of the numerical values exemplified here. The solubility of the composite powder when immersed in water at 25°C for three days can be lower than the solubility of the composite powder precursor when immersed in water at 25°C for three days. The difference between the solubility of the composite powder when immersed in water at 25°C for three days and the solubility of the composite powder precursor when immersed in water at 25°C for three days may be, for example, 2, 3, 4, 5, 10, 15, 20, 25, 30, 35, 40, 45, or 50 % by mass, and may be within the range between any two of the numerical values exemplified here.

The precursor organic material preferably has the above-mentioned water solubility and water resistance after heating and is not particularly limited as long as it has the above-mentioned properties.

Examples of the water-soluble synthetic polymer include polyvinyl alcohol, polyvinyl methyl ether, polyvinylpyrrolidone, polyacrylic acid, polyalkylene oxide, and polyamino acid, and polyvinyl alcohol (PVA) is preferred.

The polyvinyl alcohol (PVA) preferably has a saponification degree of 60 mol% or more, and more preferably 90 mol% or more. The saponification degree may be, for example, 60, 65, 70, 75, 80, 85, 90, 95, or 100 mol%, and may be within the range between any two of the numerical values exemplified here. By setting the saponification degree to be equal to or higher than the above-mentioned lower limit, the organic material can be appropriately crystallized during heat treatment and become a water-resistant organic material.

The weight average molecular weight of the PVA can be 5,000 to 300,000. The weight average molecular weight of the PVA can be, for example, 5,000, 10,000, 50,000, 100,000, or 300,000, and may be within the range between any two of the numerical values exemplified here. When the average molecular weight is within the above numerical range, the dispersion has a viscosity suitable for spray drying, and the shape of the spherical particles in the obtained composite powder becomes closer to a perfect sphere and has fewer irregularities.

Examples of natural polymers include polysaccharides and their salts. Examples of polysaccharides include glucosamine-based polysaccharides and molecules containing a glucose unit. Examples of glucosamine-based polysaccharides include chitosan, which is β-1,4-glucosamine. In addition, they include chitin, which is β-1,4-N-acetylglucosamine. Examples of molecules containing a glucose unit include β-glucan. Examples of β-glucan include β-1,4-glucan and β-1,3-glucan. Examples of β-1,4-glucan include cellulose, cellulose acetate, ethyl cellulose, methyl cellulose, carboxymethyl cellulose, carboxyethyl cellulose, hydroxyethyl cellulose, and hydroxypropyl methyl cellulose. Among these, carboxymethyl cellulose and hydroxyethyl cellulose are preferred from the viewpoint of improving crystallinity during heating. Examples of β-1,3-glucan include curdlan and paramylon. Also, alginic acid, which is a block polymer of β-D-mannuronic acid and a-L-guluronic acid, can be exemplified.

Crystalline cellulose and keratin are not preferred because they have low solubility in water and do not improve the soft focus factor. The precursor organic material according to one embodiment of the present invention may be one that does not contain crystalline cellulose or keratin. In addition, the water-resistant organic material according to one embodiment of the present invention may be one that does not contain crystalline cellulose or keratin.

When these do not dissolve in water alone, they can be used together with a solubilizer such as an acid or a base. As an example, chitosan is preferably used together with acetic acid as a solubilizer, and curdlan can be used together with ammonia water as a solubilizer. In this case, the precursor organic material can contain 1 to 300 parts by mass of the solubilizer with respect to 100 parts by mass of the compound such as chitosan or curdlan. The content of the solubilizer is, for example, 0, 50, 100, 150, 200, 250, or 300 parts by mass, and may be within the range between any two of the numerical values exemplified here.

Examples of the solvent of the dispersion may include water, an organic solvent, and a mixed solvent of water and an organic solvent. Among these, it is preferable to include water, and it is preferable to be water. Examples of water include natural water, purified water, distilled water, ion-exchanged water, pure water, and the like, and among these, ion-exchanged water is preferable. Examples of organic solvents include aliphatic monohydric alcohols such as methanol, ethanol, and isopropyl alcohol, ketones such as acetone, methyl ethyl ketone, and methyl isobutyl ketone, aromatic compounds such as toluene and xylene. The solvent may be, for example, a mixed solvent of water and an organic solvent.

The dispersion may be one in which the mica and the precursor organic material are dispersed and/or dissolved in a solvent. The concentration of the mica in the dispersion may be 0.1 to 70% by mass. The concentration of the mica may be, for example, 0.1, 0.5, 1, 5, 0, 5, 10, 15, 20, 25, 30, 35, 40, 45, 50, 60, or 70% by mass, and may be within the range between any two of the numerical values exemplified here. The concentration of the precursor organic material in the dispersion may be 0.05 to 35% by mass. The concentration of the precursor organic material may be, for example, 0.05, 0.1, 0.5, 1, 5, 0, 5, 10, 15, 20, 25, 30, or 35% by mass, and may be within the range between any two of the numerical values exemplified here.

The dispersion preferably contains 10 parts by mass or more of the precursor organic material and more preferably contains more than 10 parts by mass with respect to 100 parts by mass of the mica. The content of the precursor organic material with respect to 100 parts by mass of mica in the dispersion is, for example, 10, 15, 20, 25, 30, 35, 40, 45, 50, 55, 60, 65, 70, 75, 80, 85, 90, 95, 100, 110, 120, 130, 140, 150, 200, 250, 300, 350, 400, 450, 500, 550, 600, 650, 700, 750, 800, 850, 900, 950, 1000, 1050, 1100, 1150, or 1200 parts by mass, and may be within the range between any two of the numerical values exemplified here. By adjusting the type and amount of the mica and precursor organic material in the dispersion, the structure and physical properties of the resulting composite powder can be adjusted. For example, by making the concentration of the precursor organic material in the dispersion sufficiently high and making the content of the precursor organic material with respect to the mica sufficiently high, the mica is sufficiently coated, and a sufficient number and size of spherical particles are attached to the mica, and a composite powder with a low average friction coefficient and a high soft focus factor can be obtained.

The viscosity of the dispersion is preferably 1 Pa·s or less. By setting the viscosity at such a level, it is easy to obtain a composite powder having a structure in which mica is coated with the precursor organic material and the spherical particle is attached to the mica. In the dispersion preparation step, a treatment for adjusting the viscosity and rheological properties of the dispersion may be performed as necessary. For example, a treatment for lowering the viscosity, particularly the dynamic viscosity at high shear, or a treatment for imparting pseudoplasticity or thixotropy can be performed. For example, these treatments can be performed by adding a dispersant or by reducing the molecular weight of the organic material.

The dispersion can be prepared by stirring with a known stirrer, for example, a disperser mixer, a homomixer, a high-pressure homogenizer, or the like.

3.2 Spray Drying Step

In the spray drying step, a composite powder precursor can be obtained by spray drying the dispersion. The composite powder precursor according to the present invention is a composite powder precursor containing mica, a coating layer, and a spherical particle, wherein the mica is coated with the coating layer, the coating layer and the spherical particle contain a precursor organic material, and the spherical particle are attached to the mica or the coating layer.

In the spray drying step, the dispersion is supplied to a spray dryer adjusted to a predetermined temperature, and sprayed to obtain a composite powder precursor. The spray dryer is not particularly limited as long as it is a spray dryer used in normal granulation production. The spray dryer may include:

- a raw material tank for storing the dispersion;

- a raw material supply pump for supplying the dispersion;
- a nozzle (four-fluid nozzle, two-fluid nozzle, or one-fluid nozzle) or a rotating disk for turning the dispersion into fine droplets;
- a drying chamber for drying and granulating the droplets;
- a blower, filter, and heater for blowing dried and heated air or inert gas into the drying chamber;
- a collector for collecting the composite powder precursor by a two-point collection method, a cyclone method, a bag filter method, or the like (these may be heatable collectors).

The structure and physical properties of the obtained composite powder can be adjusted by adjusting the droplet formation conditions and drying conditions in the spray drying step.

In the spray drying step, the outlet temperature of the spray dryer can be 70 to 250°C. The outlet temperature is, for example, 70, 80, 90, 100, 110, 120, 130, 140, 150, 160, 170, 180, 190, 200, 210, 220, 230, 240, or 250°C, may be in the range between the two values exemplified herein. In addition, in the spray drying step, a part of the precursor organic material in the obtained composite powder precursor may become a water-resistant organic material. In addition, the spray drying step can also serve as a heat treatment step described later, for example, by adjusting the drying conditions after granulation, or by providing the spray dryer with a heating function or a heating chamber that can be heated and maintained for a certain period of time.

3.3 Heat Treatment Step

In the heat treatment step, the composite powder precursor is heat-treated to convert at least a part of the precursor organic material into the water-resistant organic material.

The heating temperature in the heat treatment step can be 100 to 300°C. The heating temperature is, for example, 100, 110, 120, 140, 160, 180, 200, 220, 240, 260, 280, or 300°C, and may be in the range between the two values exemplified herein.

The heating time in the heat treatment step can be 10 to 300 minutes. The heating time is, for example, 10, 20, 30, 40, 40, 60, 70, 80, 90, 100, 110, 120, 140, 160, 180, 200, 220, 240, 260, 280, or 300 minutes, and may be in the range between the two values exemplified herein

In the heat treatment step, the water resistance of the organic compound contained in the precursor organic material is improved. The mechanism for improving water resistance is not particularly limited. In general, a method for improving water resistance by forming a crosslinked structure using a crosslinking agent, or a method for improving water resistance by modifying the entire material or the surface of the material is known. However, when water resistance is improved by these methods, the biodegradability of the obtained water-resistant organic material may be deteriorated. In one embodiment of the present invention, for example, the water resistance of the precursor organic compound can be improved (the solubility can be reduced) by increasing the crystallinity of the organic compound contained in the precursor organic material. In this case, the water resistance can be improved by using a material containing molecules having crystallinity as the precursor organic material, improving the crystallinity by heating, and creating a strong and robust state in which the target molecules are more closely hydrogen-bonded to each other.

The method for producing composite powder according to one embodiment of the present invention is different from conventional methods for producing composite powder containing a plate-like particle and a spherical particle and, in the method for producing according to one embodiment of the present invention, the step of coating mica with an organic material and the step of forming a spherical particle and attaching the spherical particle to the mica can be carried out in a single step without the need for the effort of separately preparing the spherical particle or a step of separately polymerizing the spherical particle. Therefore, the producing step is simple and has great advantages in terms of cost, effort, and reduced required equipment.

EXAMPLES

The present invention will be described in more detail below based on Examples, but the present invention is not limited to these Examples.

(Example 1)

< Dispersion Preparation Step>

Mica (average particle size 20 μm) and PVA (manufactured by JAPAN VAM & POVAL CO., LTD., 10HH, saponification degree 98.5% or more, polymerization degree 240, molecular weight approximately 10,000) were added to water and the mixture was mixed to prepare a dispersion with a mica concentration of 30% by mass and a PVA concentration of 15% by mass.

<Spray Drying Step>

Spray drying was performed using a two-fluid nozzle laboratory-type spray dryer, with the inlet temperature set to 140°C to 200°C.

<Heat treatment step>

The obtained composite powder precursor was heated at 180°C for 30 minutes in an air atmosphere to obtain Composite Powder 1.

As shown in the SEM observation results described later, it was confirmed that in the Composite Powder 1, the mica was coated with PVA, spherical particles were attached to both main surfaces of the mica, and 10 to 30 spherical particles were attached to one side of one mica particle (see FIG. 1). The mass ratio of mica and PVA constituting the Composite Powder Precursor 1 was confirmed by the following method. First, the Composite Powder Precursor 1 after the spray drying step was dispersed in hot water, and the PVA attached to the mica and the spherical particles, which were composed of the PVA and attached to the mica, were redissolved in the hot water and subjected to suction filtration. Next, the residue on the filter paper was dried and weighed, and the amount of the mica constituting the Composite Powder Precursor 1 was calculated. Next, the amount of the mica was subtracted from the mass of the Composite Powder Precursor 1 before dissolving in hot water, and the amount of PVA constituting the Composite Powder Precursor 1 was calculated. As a result, it was confirmed that the mass ratio of the mica and the PVA constituting the Composite Powder Precursor 1 was approximately 2:1 (=30:15), which was the same as the charged amounts.

(Examples 2 to 19, Comparative Examples 1 to 2, 5)

The dispersion formulation, spray dryer and heat treatment conditions were as shown in Tables 1 to 3, and composite powders 2 to 21, 24 were obtained.

(Comparative Example 3)

< Dispersion Preparation Step>

PVA (manufactured by JAPAN VAM & POVAL CO., LTD., 10HH, saponification degree 98.5% or more, polymerization degree 240, molecular weight approximately 10,000) was added to water and the mixture was mixed to prepare a dispersion with a PVA concentration of 15% by mass.

<Spray Drying Step>

Spray drying was performed using a two-fluid nozzle laboratory-type spray dryer, with the inlet temperature set to 140°C to 200°C. The measured outlet temperature is shown in the table.

< Heat Treatment Step>

The obtained composite powder precursor was heated at 180°C for 30 minutes in an air atmosphere to obtain Spherical Particles 22.

<Powder Mixing Step>

15 parts by mass of the obtained Spherical Particles 1 were mixed with 30 parts by mass of mica to obtain Composite Powder 22.

(Comparative Example 4)

Similar to Comparative Example 3, the dispersion preparation step, spray drying step, and heat treatment step were performed to obtain Spherical Particles 23.

In the powder mixing step, 15 parts by mass of mica was mixed with 15 parts by mass of the obtained Spherical Particles 1 to obtain Composite Powder 23.

The raw materials used to produce the dispersion are shown below.

Natural mica: average particle size 20μm

PVA (polyvinyl alcohol) 10HH: JAPAN VAM & POVAL CO., LTD, 10HH, saponification degree 98.5% or more, polymerization degree 240, molecular weight about 10,000

PVA (polyvinyl alcohol) PVA117: Kuraray Co., Ltd., PVA117, saponification degree 98.0% or more, polymerization degree 1700, molecular weight about 76,000

PVA (polyvinyl alcohol) 500HH: JAPAN VAM & POVAL CO., LTD, 500HH, saponification degree 98.5% or more, polymerization degree 5000, molecular weight about 222,000

β-1,4-glucosamine (chitosan): KOYO CHEMICAL CO.,LTD., Koyo Chitosan FL-80, deacetylation degree 75% or more

β-1,4-glucan CMC-$NH_4$ (carboxymethylcellulose ammonium): NICHIRIN CHEMICAL INDUSTRIES, LTD., Kiccolate NA-3L

β-1,4-glucan MC (methylcellulose): Shin-Etsu Chemical Co., Ltd., METOLOSE SM-4 β-1,4-glucan HEC (hydroxyethylcellulose): Sansho Co., Ltd., SANHEC L

β-1,4-glucan HPMC (hydroxypropylmethylcellulose): Shin-Etsu Chemical Co., Ltd., METOLOSE 60SH-03

β-1,3-glucan curdlan: Mitsubishi Corporation Life Sciences Limited, curdlan Alginic acid: KIMICA Corporation, Kimika Acid G

Cellulose fiber: Evonik Japan Co., Ltd., TEGO Feel C10

(Evaluation of Composite Powder)

<Structure>

The obtained composite powder was observed by SEM, and the structure of the composite powder was observed, and the average number of spherical particles attached to one side of one mica particle were evaluated according to the following evaluation criteria. An appropriate amount of composite powder was applied to carbon tape, and conductive treatment was performed to prepare a sample. Images were taken with a scanning electron microscope (Hitachi High-Tech Corporation, model: Regulus 8230) at a magnification of 1000 to 4000 times so that one mica particle was included in one screen, and the number of spherical particles attached to one side of the mica was counted. Similarly, images were taken at a magnification of 1000 to 4000 times in the other two fields of view so that one mica particle was included in one screen, and the number of spherical particles attached to one side of the mica was counted. The observation points were located about 1 mm apart from each other. The mica was observed in three fields of view, and the average number of spherical particles attached to one side of one mica particle was calculated and evaluated according to the following evaluation criteria. The results are shown in Tables 1 to 3.

Presence or absence of spherical particle and number of spherical particle

A: 31 or more spherical particles are attached to one side of one mica particle

B: 10 to 30 spherical particles are attached to one side of one mica particle

C: 1 to 9 spherical particles are attached to one side of one mica particle

D: No spherical particles are attached to the mica

In addition, the presence or absence of the coating layer on the mica was confirmed by the following method. First, for each composite powder according to the Examples and Comparative Examples, a composite powder for confirming a coating layer was prepared.

(Preparation of Composite Powder for Confirming Coating Layer)

A dispersion was prepared in the same manner as the method for producing each composite powder in each Example and Comparative Example, except that mica was not added, and a spray drying step was performed to obtain resin particles. The obtained resin particles were then composited with the same amount of mica as each composite powder in each Example and Comparative Example to obtain a composite powder for confirming coating layer consisting of mica without a coating layer and resin particles.

(Confirmation of Presence or Absence of Coating Layer)

The composite powder according to each Example and Comparative Example and 5 g of the composite powder for confirming the coating layer according to each Example and Comparative Example were each dispersed in 50 g of a solvent (isopropyl alcohol). Each dispersion was passed through a 200 mesh sieve. Here, in the dispersion, the resin particles that had attached to the mica detached from the mica and passed through the mesh, so that the mica remained on the sieve. The residue on the 200 mesh was collected and dried in a dryer at 100°C for 3 hours to obtain a dried product, and each dried product was weighed. The difference in mass between the dried product of the composite powder according to each Example and Comparative Example and the dried product of the composite powder for confirming the coating layer according to each Example and Comparative Example was regarded as the amount of mica coating, and was evaluated according to the following evaluation criteria.

A: The dried product of the composite powder was heavier than the dried product of the composite powder for confirming the coating layer, and the difference was 5 % by mass or more with respect to the mass of the dried product of the composite powder for confirming the coating layer.

D: The dried product of the composite powder is heavier than the dried material of the composite powder for confirming the coating layer, but the difference is less than 5% by mass with respect to the mass of the dried product of the composite powder for confirming the coating layer. Or, the dried product of the composite powder is equivalent to the dried product of the composite powder for confirming the coating layer.

<Average Friction Coefficient (MIU)>

The obtained composite powder was applied to BIOSKIN PLATE(manufactured by Beaulax Co.,Ltd) at 1 $mg/cm^2$, and the friction coefficient was measured by scanning 30 mm at a speed of 1 mm/s with a load of 50 N using a friction tester KES, and the average value of the central 20 mm was taken as the average friction coefficient (MIU). The results are shown in Tables 1 to 3.

<Soft Focus Factor (SFF)>

The obtained composite powder was applied to BIOSKIN PLATE (manufactured by Beaulax Co.,Ltd) at 10 $mg/cm^2$, and the soft focus factor was evaluated using a goniophotometer (Goniophotometer GC-5000L, NIPPON DENSHOKU INDUSTRIES CO., LTD.). Specifically, the light source was fixed at a 45° position, and the sensor was scanned from 0° to 180° over the Bioskin surface to which the composite powder was applied, measuring the luminance at each angle, and the ratio of the luminance at the two points (the ratio of luminance at 65° to luminance at 135°) was taken as the soft focus factor. The results are shown in Tables 1 and 3.

<Solubility of Organic Material after Heat Treatment (Immersed in Water at 25°C for 3 Days) >

The precursor organic material used to produce the composite powder of each Example and Comparative Example were heat treated under the same conditions and was used as a sample for solubility evaluation. First, 1 g of the sample was immersed in 10 g of ion-exchanged water at 25°C for 3 days. The mixture was then suction filtered using a glass fiber filter, and the residue captured by the filter was dried in a dryer at 100°C for 2 hours, and the mass of the residue was calculated. The mass of the sample before immersion was A g and the mass of the residue was B g, and the solubility of each sample was calculated using the following formula and evaluated according to the following evaluation criteria. The results are shown in Tables 1 to 3.

$$[\text{Solubility (\% by mass)}] = (A - B)/A \times 100$$

A: 20 % by mass or less
B: more than 20 % by mass and 60 % by mass or less
C: more than 60 % by mass and less than 80 % by mass
D: 80 % by mass or more

Without heating, the solubility of PVA (polyvinyl alcohol) 10HH was 85% by mass, the solubility of PVA (polyvinyl alcohol) PVA117 was 85% by mass, the solubility of PVA (polyvinyl alcohol) 500HH was 80% by mass, the solubility of a 1:1 mixture of chitosan and acetic acid was 100% by mass, the solubility of CMC-$NH_4$ (carboxymethylcellulose ammonium) was 100% by mass, the solubility of MC (methylcellulose) was 100% by mass, the solubility of HEC (hydroxyethyl cellulose) was 100% by mass, the solubility of HPMC (hydroxypropyl methylcellulose) was 100% by mass, the solubility of a 1:1 mixture of curdlan and aqueous ammonia (5% by mass) was 100% by mass, the solubility of a 1:1 mixture of alginic acid and acetic acid was 100% by mass, and the solubility of the cellulose fibers was 0% by mass.

[Tabelle]

| table 1 | | | | | | | Example | | | | | | | | | |
|---|---|---|---|---|---|---|---|---|---|---|---|---|---|---|---|---|
| | | | | | | | 1 | 2 | 3 | 4 | 5 | 6 | 7 | 8 | 9 | 10 |
| production condition | dispersion | mica | | natural mica | | % by mass | 30 | 20 | 15 | 15 | 5 | 1 | 5 | 2.5 | 2.5 | 2.5 |
| | | precursor organic material | organic compound | PVA | 10HH | % by mass | 15 | 15 | 15 | 15 | | | | | | |
| | | | | | PVA117 | % by mass | | | | | 5 | | | | | |
| | | | | | 500HH | % by mass | | | | | | 1 | | | | |
| | | | | β-1,4-glucosamine (chitosan) | | % by mass | | | | | | | 5 | | | |
| | | | | β-1,4-glucan | $CMC-NH_4$ | % by mass | | | | | | | | 2.5 | | |
| | | | | | MC | % by mass | | | | | | | | | 2.5 | |
| | | | | | HEC | % by mass | | | | | | | | | | 2.5 |
| | | | | | HPMC | % by mass | | | | | | | | | | |
| | | | | β-1,3-glucan | curdlan | % by mass | | | | | | | | | | |
| | | | | alginic acid | | % by mass | | | | | | | | | | |
| | | | solubilizer | acetic acid | | % by mass | | | | | | | 5 | | | |
| | | | | ammonia water (5% by mass) | | % by mass | | | | | | | | | | |
| | spray drying condition | | | inlet tempreture | | °C | 200 | 200 | 200 | 200 | 200 | 200 | 200 | 200 | 200 | 200 |
| | heat treatment condition | | | tempreture | | °C | 180 | 180 | 180 | 120 | 180 | 180 | 180 | 180 | 180 | 180 |
| | | | | time | | min | 30 | 30 | 30 | 240 | 30 | 30 | 30 | 30 | 30 | 30 |
| composite powder | structure | | | presence or absence of coating layer | | | A | A | A | A | A | A | A | A | A | A |
| | | | | presence or absence of spherical particle and number of spherical particle | | | B | B | B | B | B | B | B | B | B | B |
| | average coefficient of friction (MIU) | | | | | | 0.64 | 0.61 | 0.55 | 0.54 | 0.60 | 0.66 | 0.61 | 0.68 | 0.68 | 0.67 |
| | soft focus factor (SFF) | | | | | | 1.03 | 1.05 | 1.07 | 1.08 | 1.10 | 1.02 | 1.02 | 1.05 | 1.06 | 1.02 |
| | solubility of organic material after heat treatment (immersed in water at 25°c for 3 days) | | | | | | A | A | A | A | A | B | B | A | C | B |

| table 2 | | | | | | | Example | | | | | | | | |
|---|---|---|---|---|---|---|---|---|---|---|---|---|---|---|---|
| | | | | | | | 11 | 12 | 13 | 14 | 15 | 16 | 17 | 18 | 19 |
| production condition | dispersion | mica | | natural mica | | % by mass | 2.5 | 1 | 1 | 30 | 60 | 1.5 | 1 | 1 | 15 |
| | | precursor organic material | organic compound | PVA | 10HH | % by mass | | | | 5 | 10 | 15 | 1 | 1 | 15 |
| | | | | | PVA117 | % by mass | | | | | | | | | |
| | | | | | 500HH | % by mass | | | | | | | | | |
| | | | | β-1,4-glucosamine (chitosan) | | % by mass | | | | | | | | | |
| | | | | β-1,4-glucan | $CMC-NH_4$ | % by mass | | | | | | | | | |
| | | | | | MC | % by mass | | | | | | | | | |
| | | | | | HEC | % by mass | | | | | | | | | |
| | | | | | HPMC | % by mass | 2.5 | | | | | | | | |
| | | | | | MCC | % by mass | | | | | | | | | |
| | | | | β-1,3-glucan | curdlan | % by mass | | 1 | | | | | | | |
| | | | | alginic acid | | % by mass | | | 1 | | | | | | |
| | | | solubilizer | acetic acid | | % by mass | | | 1 | | | | | | |
| | | | | ammonia water (5% by mass) | | % by mass | | 1 | | | | | | | |
| | spray drying condition | | | inlet tempreture | | °C | 200 | 200 | 200 | 200 | 200 | 200 | 140 | 180 | 200 |
| | heat treatment condition | | | tempreture | | °C | 180 | 180 | 180 | 180 | 180 | 180 | 180 | 180 | 100 |
| | | | | time | | min | 30 | 30 | 30 | 30 | 30 | 30 | 30 | 30 | 240 |
| composite powder | structure | | | presence or absence of coating layer | | | A | A | A | A | A | A | A | A | A |
| | | | | presence or absence of spherical particle and number of spherical particle | | | B | B | B | C | C | A | B | B | B |
| | average coefficient of friction (MIU) | | | | | | 0.68 | 0.68 | 0.69 | 0.73 | 0.73 | 0.55 | 0.55 | 0.49 | 0.55 |
| | soft focus factor (SFF) | | | | | | 1.04 | 1.05 | 1.06 | 0.94 | 1.01 | 1.20 | 0.86 | 0.87 | 1.06 |
| | solubility of organic material after heat treatment (immersed in water at 25°c for 3 days) | | | | | | C | A | B | A | A | A | A | A | C |

| table 3 | | | | | | | Comparative Example | | | | |
|---|---|---|---|---|---|---|---|---|---|---|---|
| | | | | | | | 1 | 2 | 3 | 4 | 5 |
| production condition | dispersion | mica | | natural mica | | % by mass | 30 | 15 | (30) | (15) | 2.5 |
| | | precursor organic material | organic compound | PVA | 10HH | % by mass | 1 | | 15 | 15 | |
| | | | | | PVA117 | % by mass | | | | | |
| | | | | | 500HH | % by mass | | | | | |
| | | | | $\beta$-1,4-glucosamine (chitosan) | | % by mass | | | | | |
| | | | | $\beta$-1,4-glucan | CMC-NH4 | % by mass | | | | | |
| | | | | | MC | % by mass | | | | | |
| | | | | | HEC | % by mass | | | | | |
| | | | | | HPMC | % by mass | | | | | |
| | | | | | cellulose fiber | % by mass | | | | | 2.5 |
| | | | | $\beta$-1,3-glucan | curdlan | % by mass | | | | | |
| | | | | alginic acid | | % by mass | | | | | |
| | | | solubilizer | acetic acid | | % by mass | | | | | |
| | | | | ammonia water | | % by mass | | | | | |
| | spray drying condition | | | inlet tempreture | | °C | 200 | 200 | 200 | 200 | 200 |
| | heat treatment condition | | | tempreture | | °C | 180 | - | 180 | 180 | 180 |
| | | | | time | | min | 30 | - | 30 | 30 | 30 |
| composite powder | structure | | | presence or absence of coating layer | | | A | - | D | D | D |
| | | | | presence or absence of spherical particle and number of spherical particle | | | D | D | B | B | D |
| | average coefficient of friction (MIU) | | | | | | 0.74 | 0.67 | 0.64 | 0.58 | 0.70 |
| | soft focus factor (SFF) | | | | | | 0.76 | 0.59 | 0.78 | 0.85 | 0.83 |
| | solubility of organic material after heat treatmen t (immersed in water at 25°c for 3 days) | | | | | | A | A | A | A | A |

## Claims

**1.** A composite powder comprising mica, a coating layer, and a spherical particle, wherein:

the coating layer coats the mica;
the spherical particle is attached to the mica or the coating layer; and
the coating layer and the spherical particle are composed of a water-resistant organic material.

**2.** The composite powder of Claim 1, the composite powder has an average friction coefficient of 0.75 or less and a soft focus factor of 0.86 or more.

**3.** The composite powder of Claim 1 or 2, comprising 10 parts by mass or more of the water-resistant organic material with respect to 100 parts by mass of the mica.

**4.** The composite powder of Claim 1 or 2, used for cosmetic.

**5.** A method for producing the composite powder of Claim 1 or 2, comprising a dispersion preparation step, a spray drying step, and a heat treatment step, wherein:

in the dispersion preparation step, a dispersion containing the mica and a precursor organic material is prepared;
in the spray drying step, the dispersion is spray dried to obtain a composite powder precursor; and
in the heat treatment step, the composite powder precursor is heat treated to convert at least a part of the precursor organic material into the water-resistant organic material.

**6.** The method for producing the composite powder of Claim 5, wherein the solubility of the precursor organic material when immersed in water at 25°C for three days is at least 5% by mass higher than the solubility of the water-resistant organic material when immersed in water at 25°C for three days.

Fig.1

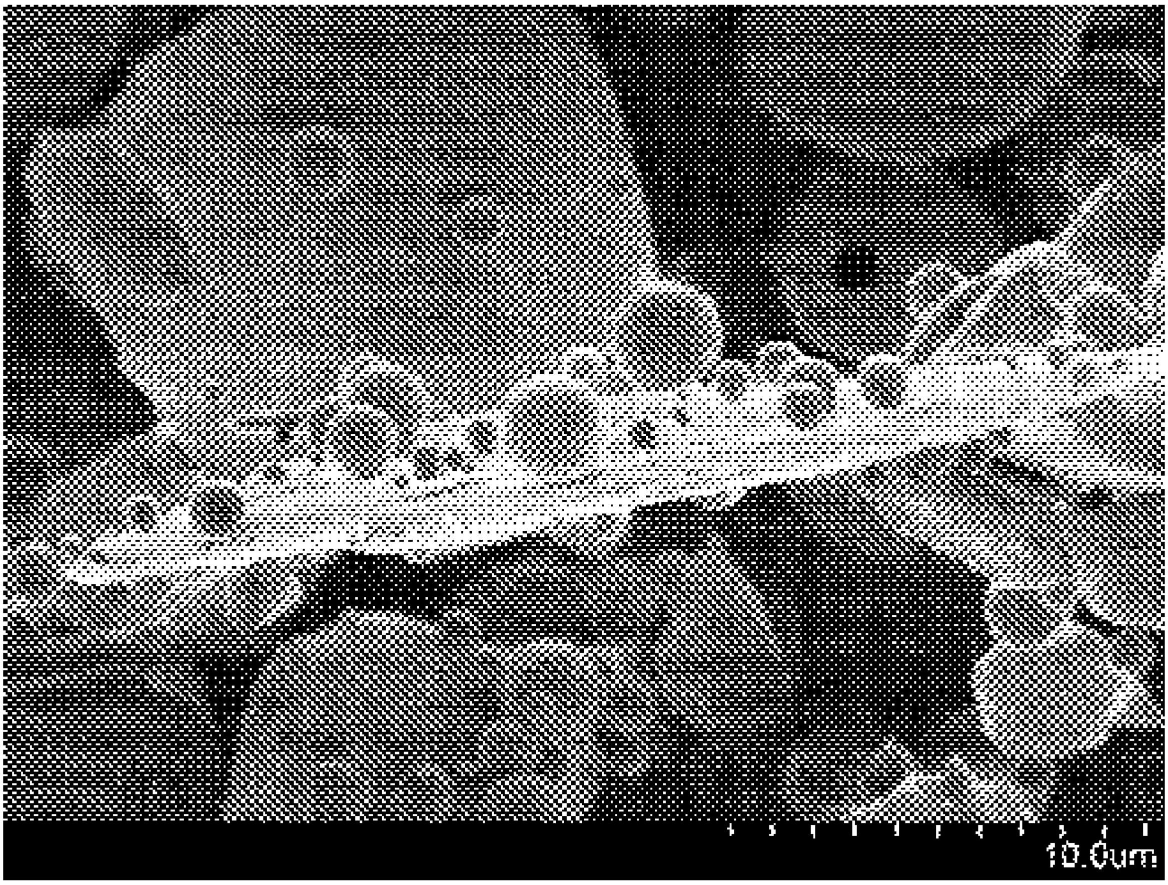

**INTERNATIONAL SEARCH REPORT**

International application No.
**PCT/JP2023/039304**

**A. CLASSIFICATION OF SUBJECT MATTER**

***C09C 1/28***(2006.01)i; ***C09C 1/40***(2006.01)i; ***C09C 3/10***(2006.01)i; ***C09D 17/00***(2006.01)i
FI: C09C1/28; C09D17/00; C09C1/40; C09C3/10

According to International Patent Classification (IPC) or to both national classification and IPC

**B. FIELDS SEARCHED**

Minimum documentation searched (classification system followed by classification symbols)

A61K8/00-8/99; A61Q1/00-90/00; C09C1/00-3/12; C09D15/00-17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-37812 A (DAITO KASEI KOGYO CO LTD) 24 February 2011 (2011-02-24) claims 1-5, paragraphs [0001], [0010], [0017], [0021], production examples 2-3 | 1-6 |
| X | JP 2002-68929 A (SEKISUI PLASTICS CO LTD) 08 March 2002 (2002-03-08) claims 1, 5-6, paragraphs [0001], [0008], [0015], example 1 | 1, 3-4 |
| A | | 2, 5-6 |
| A | JP 2006-52299 A (CATALYSTS & CHEM IND CO LTD) 23 February 2006 (2006-02-23) claims 1-4, 7-8, paragraphs [0006], [0020], examples 1-7 | 1-6 |
| A | JP 5-112429 A (SOKEN KAGAKU KK) 07 May 1993 (1993-05-07) claims 1-4, paragraphs [0010]-[0012], examples 1-4 | 1-6 |
| A | JP 7-291845 A (SOKEN KAGAKU KK) 07 November 1995 (1995-11-07) claims 1-4, paragraphs [0042], [0057]-[0060], examples 1-2 | 1-6 |
| A | JP 2001-323070 A (CATALYSTS & CHEM IND CO LTD) 20 November 2001 (2001-11-20) claims 1-5, paragraphs [0001], [0005], [0008], [0015]-[0021], examples 1-15 | 1-6 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/039304**

| Patent document cited in search report | Publication date (day/month/year) | Patent family member(s) | Publication date (day/month/year) |
|---|---|---|---|
| JP 2011-37812 A | 24 February 2011 | (Family: none) | |
| JP 2002-68929 A | 08 March 2002 | (Family: none) | |
| JP 2006-52299 A | 23 February 2006 | US 2006/0034879 A1<br>claims 1-4, 7-8, paragraphs [0013], [0057]-[0058], examples 1-7<br>EP 1632212 A1<br>KR 10-2006-0050272 A | |
| JP 5-112429 A | 07 May 1993 | (Family: none) | |
| JP 7-291845 A | 07 November 1995 | (Family: none) | |
| JP 2001-323070 A | 20 November 2001 | US 2001/0028890 A1<br>claims 1-8, paragraphs [0001], [0007], [0013], [0026]-[0035], examples 1-15<br>KR 10-2001-0088428 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011140444 A